# FASCICULE DE BREVET EUROPEEN

(11) **EP 2 824 783 B1**
(45) Date de publication et mention de la délivrance du brevet: **30.03.2016**
(21) Numéro de dépôt: 14176124.7
(22) Date de dépôt: 08.07.2014
(51) Int. Cl.: H02G 3/10, H02G 3/14

(54) **Boîtier pour équipements de réseau électrique**
Gehäuse für Ausstattungen eines Stromnetzes
Housing for equipment of a power grid

(30) Priorité: 10.07.2013 FR 1356791
(43) Date de publication de la demande: 14.01.2015
(73) Titulaire: Schneider Electric Industries SAS, 92500 Rueil-Malmaison (FR)
(72) Inventeur: Message Thebaudeau, Laetitia, 38050 Grenoble Cedex 9 (FR); Pollo, Stéphane, 38050 Grenoble Cedex 9 (FR)
(74) Mandataire: Brevalex

(56) Documents cités:
- DE-U1- 8 703 134
- FR-A1- 2 884 978
- US-A1- 2006 016 809

## Description

L'invention présente a trait à un boîtier pour équipements de réseau électrique.

De tels boîtiers comprennent une partie principale de compartiment, contenant les équipements, concave et ayant une face ouverte, et un capot pouvant à volonté dégager ou couvrir la face ouverte, de manière à protéger les équipements, ou au contraire à les exposer. De tels boîtiers peuvent être utilisés en extérieur ou en intérieur.

Dans un certain nombre de conceptions, le capot et le compartiment sont assemblés exclusivement au moyen d'ergots souples, engagés dans des logements complémentaires ou des découpes. L'ouverture du compartiment s'effectue alors en pressant sur les ergots, de manière à les dégager des logements, et d'enlever ensuite le capot. Cette conception présente certains inconvénients. Les ergots sont des parties fragiles du boîtier, qui sont assez facilement rompus, et d'autant plus s'ils sont nombreux. Et quand le capot est enlevé, il est complètement séparé du compartiment et doit donc être entreposé dans un lieu sûr, sans jouer aucun rôle utile.

Une autre conception connue ne possède pas ces inconvénients. Le capot est articulé au compartiment par une charnière. Le boîtier comprend encore des moyens de verrouillage et des moyens de blocage entre le capot et le compartiment, permettant respectivement de maintenir avec stabilité le capot en position de fermeture du boîtier et d'ouverture du boîtier. Les moyens de verrouillage comprennent typiquement des ergots souples engagés dans des logements, mais en nombre moins important que dans les conceptions où ils assurent à eux seuls le maintien du capot, et les moyens de blocage consistent en une béquille, qui est une petite pièce de butée tournant autour d'un axe et disposée dans le compartiment, qui peut être déployée hors du compartiment quand le boîtier est ouvert, afin que son extrémité libre atteigne le capot et le maintienne dans la position d'ouverture.

L'art antérieur proche comporte les documents FR-2 884 978-A et US-2006/016 809-A.

Avec cette conception, non seulement les ergots sont moins nombreux, mais le capot est maintenu dans une position stable d'ouverture du boîtier. Il reste toujours articulé au compartiment, ce qui est plus commode, et en faisant un angle droit avec lui à la position d'ouverture, ce qui permet de l'utiliser comme auvent abritant le contenu du boîtier des intempéries, s'il est articulé au sommet du compartiment.

Dans l'invention, on améliore une conception décrite ci-dessus, en remplaçant la béquille caractéristique du mécanisme de blocage connu par une pièce moins compliquée à produire, avantageusement intégrée à la structure du boîtier et unitaire avec lui, et d'obtenir ainsi un boîtier de conception simplifiée. Les avantages du boîtier précédent sont maintenus, le capot restant articulé au compartiment et n'étant donc jamais séparé de lui, et pouvant toujours aider à abriter le contenu du compartiment à l'état d'ouverture, quand il est déployé horizontalement au-dessus de la face ouverte.

Sous une forme générale, l'invention concerne un boîtier pour équipements de réseau électrique, comprenant un compartiment concave ayant une face ouverte et un capot pouvant dégager ou couvrir à volonté la face ouverte, le capot et le compartiment étant unis par au moins une charnière, et des moyens de blocage du capot à une position de dégagement de la face ouverte (ou d'ouverture du boîtier), la charnière comprenant deux axes alignés à une extrémité du capot et deux logements de réception des axes sur deux faces latérales opposées du compartiment, où les logements de réception sont des rainures s'allongeant sur la face latérale entre une extrémité antérieure plus proche de la face ouverte et une extrémité postérieure plus éloignée de la face ouverte, et dans lesquelles les axes coulissent, et les moyens de blocage consistent en au moins une saillie du capot contenue dans le compartiment quand le capot est en position de couverture de la face ouverte, et adjacente à ladite extrémité du capot, caractérisé en ce que les rainures comprennent une portion en coude à au moins une extrémité.

Quand le capot est ouvert, les saillies sont déployées hors du compartiment, et un recul du capot, faisant coulisser les axes de la charnière le long de la rainure, permet de placer les saillies sur la face supérieure du compartiment, afin qu'elles s'appuient sur cette face supérieure et maintiennent le capot ouvert quand il est relâché. Les saillies peuvent être fabriquées par moulage avec le reste du capot. Il n'y a pas besoin de construire une pièce séparée telle que la béquille, ni de devoir la monter sur le reste du boîtier par un mécanisme permettant son mouvement.

Les rainures peuvent ainsi comprendre une première portion en coude, à l'extrémité postérieure, qui est dirigée vers une extrémité adjacente des faces latérales, c'est-à-dire, normalement, vers la face supérieure du boîtier. Quand les axes des charnières pénètrent dans cette portion en coude, ils y sont maintenus par le poids propre du capot, qui la fait basculer autour des saillies en appui sur la face supérieure du compartiment, ce qui maintient le capot en place. Ce coude offre donc un verrouillage du capot en position ouverte.

Les rainures peuvent encore comprendre une portion en coude à l'extrémité antérieure, qui est dirigée à l'opposé de ladite extrémité adjacente des faces latérales. Cette disposition contribue, à l'inverse de la précédente, à maintenir le capot en position de couverture de la face ouverte (ou de fermeture du boîtier), tout en dégageant le capot à l'ouverture, ce qui facilite son mouvement, tout en permettant d'employer plus facilement la saillie ou les saillies, grâce à l'élévation du capot au-dessus de la partie principale.

Les saillies peuvent posséder une arête de guidage incurvée, dirigée vers une face du compartiment sur laquelle les saillies s'appuient quand le capot est dans la position d'ouverture, et pouvant glisser sur ladite face, ce qui facilite la fermeture du boîtier, en guidant le capot vers la position de fermeture correcte.

Les saillies du capot peuvent être au nombre de deux, respectivement adjacentes aux faces latérales du compartiment, pour une solidité de construction et une stabilité du mouvement plus grandes.

Le compartiment peut comprendre comme moyen de verrouillage du capot en position fermée, à l'opposé de l'extrémité comportant les saillies de blocage, des ergots souples saillant dans un même sens que lesdites saillies, et comprenant des excroissances latérales pénétrant dans des découpes de la partie principale du boîtier à une position de couverture de la face ouverte par le capot. Inversement, les ergots peuvent être mise en place sur le capot avec des découpes sur le compartiment.

Une réalisation de l'invention, donnée à titre purement illustratif, sera maintenant décrite plus complètement, en liaison aux Figures. La Figure 1 représente le boîtier à l'état assemblé ; la Figure 2 représente le boîtier à l'état ouvert ; la Figure 3 représente le compartiment ; et les Figures 4 et 5 représentent le capot en perspective et en vue de côté.

Par simplification de la description, les termes géométriques, tels que « orthogonal », etc. doivent se comprendre dans leur acceptation mécanique, c'est-à-dire tolérant un écart par rapport à la définition mathématique stricte : par exemple, un « rectangle » peut, selon l'invention, être bombé et avoir des angles émoussés différant légèrement de 90°.

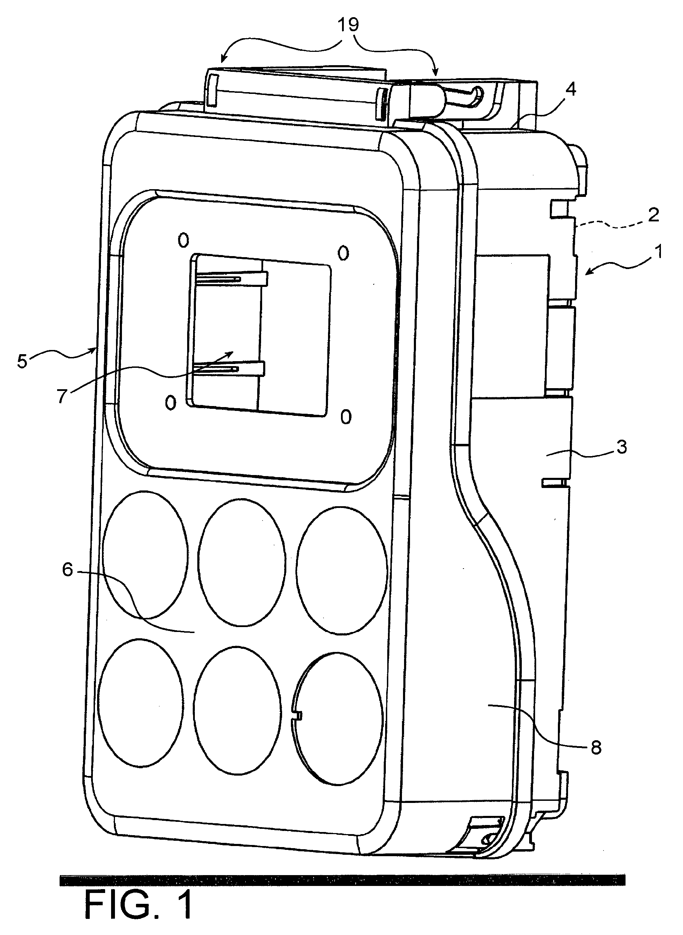

La Figure 1 représente le boîtier à l'état assemblé. Un compartiment 1 constituant une partie principale du boîtier est fixé à un mur, ou un autre support, par une face postérieure 2, et comprend encore une bordure latérale, comprenant deux côtés latéraux 3 opposés (un seul apparaît à la Figure 1) et une face supérieure 4. Le boîtier comprend encore un capot 5, assemblé au compartiment 1 de manière à fermer son contenu. Le capot 5 comprend une face antérieure 6 pouvant comprendre une fenêtre 7 d'inspection ou d'exposition à des moyens de mesure ou contrôle, notamment par le biais d'une interface homme-machine, et, éventuellement, une bordure latérale 8, en prolongement de celle du compartiment 1.

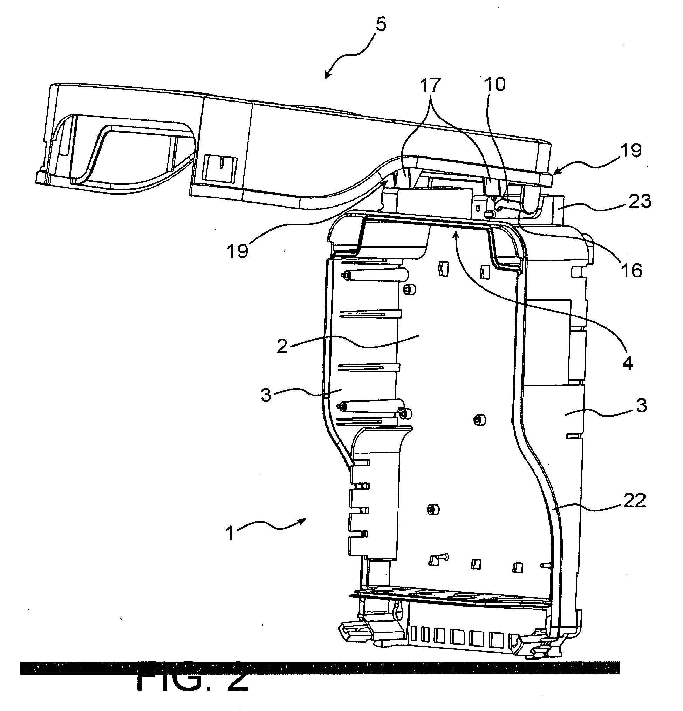

La Figure 2 illustre le boîtier à l'état ouvert. Le capot 5 a basculé vers le haut et glissé vers l'arrière, étant articulé à la face supérieure 4 du compartiment 1, en laissant dégagée une face ouverte antérieure 22 du compartiment 1, en avant de la bordure latérale. Si le compartiment 1 est vertical, le capot 5 forme un auvent au-dessus de la face ouverte 22 et protège donc les équipements électriques, non représentés, situés à l'intérieur du compartiment 1.

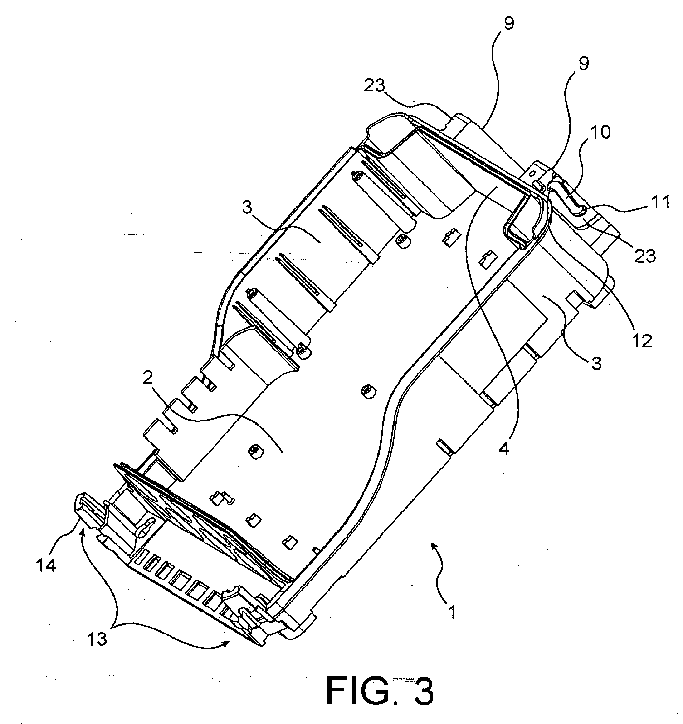

La Figure 3 illustre le compartiment 1 isolé. La face supérieure 4 est munie de deux arêtes 9, dont chacune comprend une rainure 10 sur une face latérale 23, ici extérieure. Chaque rainure 10 comprend une portion principale, s'étendant essentiellement d'avant en arrière, un coude 11 à l'extrémité postérieure, dirigé vers le haut et l'extrémité supérieure du compartiment 1 (vers l'extérieur du compartiment 1) à partir de la portion principale de la rainure, et un autre coude 12, à l'extrémité antérieure, opposé au premier, c'est-à-dire donnant vers le bas, ou vers l'intérieur du compartiment 1. On remarque aussi, à l'opposé de la face supérieure 4, une paire d'ergots 13 souples, pointant vers l'avant, à partir de la face de fond 2, comprenant chacun, à leur extrémité, une excroissance latérale 14, dirigée vers l'extérieur.

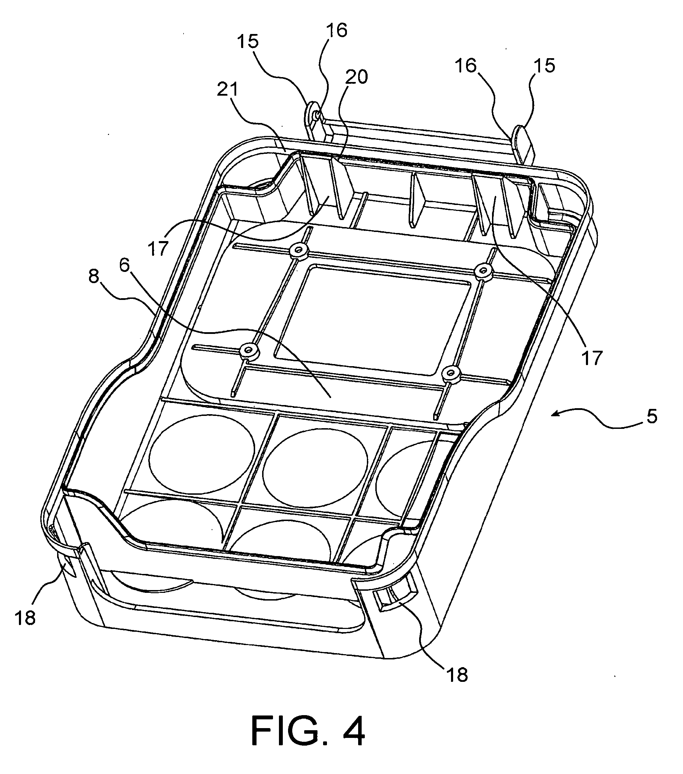

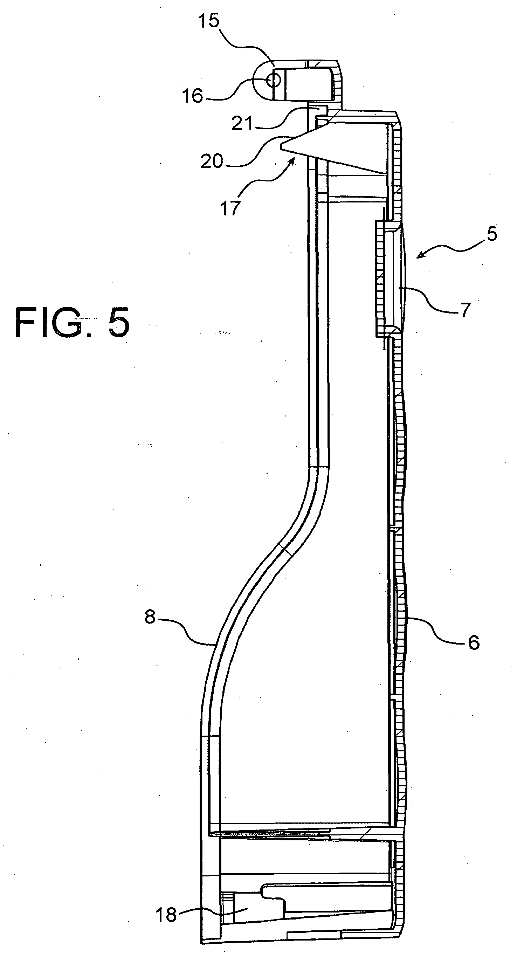

Les Figures 4 et 5 représentent maintenant le capot 5 isolé. Son sommet comprend deux leviers 15, dirigés vers l'arrière du boîtier, saillant au-delà de la bordure latérale 8, et dont chacun porte un axe 16, les axes 16 étant alignés et convergents ; les rainures 10 auraient inversement pu être dirigées vers l'intérieur des arêtes 9, et les axes 16 sur les leviers 15 auraient été divergents. Le capot 5 comprend encore une paire de saillies 17, situées à l'intérieur de la bordure latérale 8 et saillant hors de ladite bordure latérale 8 vers l'arrière du boîtier. La bordure latérale 8 possède une paire de découpes 18 inférieures, aux coins inférieurs.

Revenant aux Figures 1 et 2, on voit que les axes 16 sont retenus dans les rainures 10 et forment un dispositif à charnière avec elles, composé ici de deux charnières 19 puisque les rainures 10 sont sur des arêtes 9 séparées, qui permettent au capot 5 de tourner par rapport au compartiment 1. Dans la position d'ouverture du boîtier, représentée à la Figure 2, les axes 16 sont à l'arrière des rainures 10 et le capot 5 est laissé libre. Les saillies 17 appuient sur la face supérieure 4 du compartiment 1, et le basculement produit par le déséquilibre du poids du capot 5 soulève l'arrière de celui-ci et soulève donc les axes 16 jusqu'aux sommets des coudes postérieurs 11. Le capot 5 est alors maintenu immobile, et il est possible d'intervenir sur les équipements situés dans le compartiment 1 sans se soucier de lui.

Pour refermer le capot 5 et revenir à l'état de la Figure 1, on soulève légèrement l'extrémité antérieure du capot 5 en la tirant vers soi, de manière à replacer les axes 16 dans la partie principale des rainures 10. Les saillies 17 sont déplacées vers l'avant jusqu'à ce qu'elles dépassent de la face supérieure 4. Il est alors possible d'abaisser le capot 5 et de refermer le boîtier jusqu'à ce que les coins inférieurs de sa bordure latérale 8 atteignent les ergots 13 et les plient légèrement, et enfin que les ergots 13 se relâchent, quand leurs excroissances 14 sont retenues dans les découpes 18. Il est manifeste que la disposition des ergots et découpes pourrait être intervertie, les ergots étant alors présents sur le capot 5, dirigés vers le compartiment 1 ou à l'opposé de la face antérieure 6, et les découpes étant présentes sur le compartiment 1. Les découpes pourraient être remplacées par d'autres logements de réception des ergots, tant que les ergots peuvent être déformés pour autoriser l'ouverture du boîtier. Les ergots 13 et les découpes 18 (ou les logements) peuvent être placés n'importe où dans le boîtier, mais avantageusement sur les côtés du compartiment 1 et du capot 5 opposés aux charnières 19. Le mouvement de refermeture du boîtier est favorisé par les aménagements suivants. Les saillies 17 présentent, du côté supérieur, dirigée vers les axes 16, une arête inclinée 20, qui peut glisser sur le bord de la face supérieure 4 et favoriser l'emboîtement du capot 5 et du compartiment 1 dans une position correcte, en favorisant l'insertion de la face supérieure 4, dans un intervalle étroit 21, à la périphérie du capot 5 entre les saillies 17 et l'extrémité de la bordure latérale 8. Et les axes 16 s'abaissent dans les coudes antérieurs 12 des rainures 10, de sorte que les charnières 19 empêchent les mouvements d'avant en arrière du capot 5, par rapport au compartiment 1, au sommet du boîtier.

## Revendications

1. Boîtier pour équipements de réseau électrique, comprenant un compartiment (1) concave ayant une face ouverte (22) et un capot (5) pouvant dégager ou couvrir à volonté la face ouverte (22), le capot et le compartiment étant unis par au moins une charnière (19) et des moyens de blocage du capot à une position de dégagement de la face ouverte, la charnière (19) comprenant deux axes (16) alignés à une extrémité du capot et deux logements de réception des axes sur deux faces latérales opposées du compartiment, où les logements de réception sont des rainures s'allongeant sur les faces latérales entre une extrémité antérieure plus proche de la face d'ouverture et une extrémité postérieure plus éloignée de la face d'ouverture, et dans lesquelles les axes (16) coulissent, et les moyens de blocage consistent en au moins une saillie (17) du capot (5) contenue dans le compartiment (1) quand le capot (5) est en position de couverture de la face ouverte (22), et adjacente à ladite extrémité du capot, **caractérisé en ce que** les rainures (10) comprennent une portion en coude (11, 12) à au moins une extrémité.

2. Boîtier pour équipements de réseau électrique selon la revendication 1, **caractérisé en ce que** la portion en coude (11) est à l'extrémité postérieure et dirigée vers une extrémité adjacente du compartiment.

3. Boîtier pour équipements de réseau électrique selon l'une quelconque des revendications 1 ou 2, **caractérisé en ce que** la portion en coude (12) est à l'extrémité antérieure et dirigée à l'opposé de l'extrémité adjacente du compartiment.

4. Boîtier pour équipements de réseau électrique selon l'une quelconque des revendications 1 à 3, **caractérisé en ce que** la saillie (17) possède une portion dirigée vers une face (4) de la partie principale du boîtier sur laquelle la saillie s'appuie quand le capot est dans la position de dégagement de la face ouverte (22), et pouvant glisser sur ladite face (4).

5. Boîtier pour équipements de réseau électrique selon l'une quelconque des revendications 1 à 4, **caractérisé en ce que** les saillies du capot sont deux, respectivement adjacentes à des côtés latéraux (3) du compartiment.

6. Boîtier pour équipements de réseau électrique selon l'une quelconque des revendications 1 à 5, dans lequel le capot et le compartiment sont reliés par deux charnières (19).

7. Boîtier pour équipements de réseau électrique selon l'une quelconque des revendications 1 à 6, **caractérisé en ce que** le compartiment comprend des ergots (13) souples saillant dans un même sens que ladite saillie (17) du capot, les ergots (13) comprenant des excroissances latérales (14) pénétrant dans des découpes (18) ou logements du capot localisées à l'opposé de ladite extrémité du capot.

8. Boîtier pour équipements de réseau électrique selon l'une quelconque des revendications 1 à 6, **caractérisé en ce que** le capot comprend des ergots souples saillant vers le compartiment (1), les ergots comprenant des excroissances latérales pénétrant dans des découpes ou logements du compartiment (1)

9. Boîtier pour équipements de réseau électrique selon l'une quelconque des revendications 6 ou 7, **caractérisé en ce que** les ergots (13) et les découpes (18) ou les logements sont placés à l'opposé des charnières (19) sur le capot (5) et le compartiment (1).

## Patentansprüche

1. Gehäuse für Ausrüstungen eines Stromnetzes, umfassend ein konkav ausgeführtes Fach (1) mit einer offenen Seite (22) und einer Haube (5), welche die offene Seite (22) beliebig freigeben bzw. abdecken kann, wobei die Haube und das Fach über zumindest ein Scharnier (19) verbunden sind, und Sicherungsmittel zum Sichern der Haube in einer Stellung zum Freigeben der offenen Seite, wobei das Scharnier (10) zwei Achsen (16) aufweist, die mit einem Ende der Haube fluchteten, sowie zwei Aufnahmeausnehmungen zum Aufnehmen der Achsen an zwei entgegengesetzten Seitenflächen des Faches, wo die Aufnahmeausnehmungen Rillen sind, die sich über die Seitenflächen zwischen einem vorderen Ende, das näher an der Öffnungsseite liegt, und einem hinteren Ende erstrecken, das von der Öffnungsseite weiter entfernt liegt, und in denen die Achsen (16) verschiebbar sind, und wobei die Sicherungsmittel aus zumindest einem Vorsprung (17) der Haube (5) bestehen, der dann, wenn die Haube (5) in Abdeckstellung zum Abdecken der offenen Seite (22) ist, in dem Fach (1) enthalten ist und an das Ende der Haube angrenzt, **dadurch gekennzeichnet, dass** die Rillen (10) an zumindest einem Ende einen gekröpften Abschnitt (11, 12) aufweisen.

2. Gehäuse für Ausrüstungen eines Stromnetzes nach Anspruch 1, **dadurch gekennzeichnet, dass** der gekröpfte Abschnitt (11) am hinteren Ende liegt und zu einem angrenzenden Ende des Fachs weist.

3. Gehäuse für Ausrüstungen eines Stromnetzes nach einem der Ansprüche 1 oder 2, **dadurch gekennzeichnet, dass** der gekröpfte Abschnitt (12) am vorderen Ende liegt und entgegengesetzt zum angrenzenden Ende des Fachs weist.

4. Gehäuse für Ausrüstungen eines Stromnetzes nach einem der Ansprüche 1 bis 3, **dadurch gekennzeichnet, dass** der Vorsprung (17) einen Abschnitt besitzt, der zu einer Fläche (4) des Hauptteils des Gehäuses weist, an welcher der Vorsprung sich dann abstützt, wenn die Haube in der Stellung zum Freigeben der offenen Seite (22) ist, und der an der Fläche (4) gleitbeweglich ist.

5. Gehäuse für Ausrüstungen eines Stromnetzes nach einem der Ansprüche 1 bis 4, **dadurch gekennzeichnet, dass** die Vorsprünge der Haube zwei sind und an jeweilige Seitenflächen (3) des Fachs angrenzen.

6. Gehäuse für Ausrüstungen eines Stromnetzes nach einem der Ansprüche 1 bis 5, wobei die Haube und das Fach über zwei Scharniere (19) verbunden sind.

7. Gehäuse für Ausrüstungen eines Stromnetzes nach einem der Ansprüche 1 bis 6, **dadurch gekennzeichnet, dass** das Fach nachgiebige Nasen (13) aufweist, die in einer gleichen Richtung wie der Vorsprung (17) der Haube vorspringen, wobei die Nasen (13) seitliche Auskragungen (14) aufweisen, die in Ausschnitte (18) bzw. Aufnahmeausnehmungen der Haube eingreifen und dem Ende der Haube entgegengesetzt angeordnet sind.

8. Gehäuse für Ausrüstungen eines Stromnetzes nach einem der Ansprüche 1 bis 6, **dadurch gekennzeichnet, dass** die Haube nachgiebige Nasen aufweist, die zum Fach (1) hin vorspringen, wobei die Nasen seitliche Auskragungen aufweisen, die in Ausschnitte bzw. Aufnahmeausnehmungen des Fachs (1) eingreifen.

9. Gehäuse für Ausrüstungen eines Stromnetzes nach einem der Ansprüche 6 oder 7, **dadurch gekennzeichnet, dass** die Nasen (13) und die Ausschnitte (18) bzw. Aufnahmeausnehmungen entgegengesetzt zu den Scharnieren (19) an der Haube (5) und dem Fach (1) angeordnet sind.

## Claims

1. Box for electrical network equipment, comprising a concave compartment (1) with one open face (22) and a lid (5) so that the open face (22) can be exposed or covered whenever required, the lid and the compartment being assembled by at least one hinge (19), and means of blocking the lid in a position in which the open face is exposed, the hinge (19) comprising two hinge pins (16) in line with each other at one end of the lid and two housings into which the hinge pins fit on two opposite side faces of the compartment, wherein the reception housings are grooves extending on the side faces between a front end closer to the opening face and a back end further away from the opening face and in which the hinge pins (16) slide, and the blocking means consist of at least one projection (17) of the lid (5) contained in the compartment (1) when the lid (5) is in position to cover the open face (22), and adjacent to said end of the lid, **characterised in that** grooves (10) comprise a bent portion (11, 12) at least at one end.

2. Box for electrical network equipment according to claim 1, **characterised in that** the bent portion (11) is at the back end, towards an adjacent end of the compartment.

3. Box for electrical network equipment according to either claim 1 or 2, **characterised in that** the bent portion (12) is at the front end, opposite the end adjacent to the compartment.

4. Box for electrical network equipment according to any of claims 1 to 3, wherein the projection (17) has a portion facing a face (4) of the main part of the box on which the projection bears when the lid is in the exposed position of the open face (22), and that can slide on said face (4).

5. Box for electrical network equipment according to any one of claims 1 or 4, **characterised in that** the lid has two of said projections, adjacent to the lateral sides (3) of the compartment.

6. Box for electrical network equipment according to any of claims 1 to 5, in which the lid and the compartment are connected by two hinges (19).

7. Box for electrical network equipment according to any of claims 1 to 6, **characterised in that** the compartment comprises flexible pins (13) projecting in the same direction as said projection (17) of the lid, the pins (13) comprising side protuberances (14) penetrating into cutouts (18) or housings of the lid opposite said end of the lid.

8. Box for electrical network equipment according to any of claims 1 to 6, **characterised in that** the lid comprises flexible pins projecting towards the compartment (1), the pins comprising side protuberances penetrating into cutouts or housings of the compartment (1)

9. Box for electrical network equipment according to either claim 6 or 7, **characterised in that** the pins (13) and the cutouts (18) or housings are placed opposite the hinges (19) on the lid (5) and the compartment (1).
